# EUROPÄISCHE PATENTANMELDUNG

(11) **EP 3 216 755 A1**
(43) Veröffentlichungstag der Anmeldung: **13.09.2017**
(21) Anmeldenummer: 17153656.8
(22) Anmeldetag: 30.01.2017
(51) Int. Cl.: C01B 3/34, C01B 13/02, H01M 8/0612

(54) **FILTERVORRICHTUNG**

(30) Priorität: 11.03.2016 DE 102016203997
(71) Anmelder: Robert Bosch GmbH, 70442 Stuttgart (DE)
(72) Erfinder: Matte, Eric, 70839 Gerlingen-Schillerhoehe (DE); Heeren, Imke, 70199 Stuttgart (DE); Lupetin, Piero, 70567 Stuttgart (DE); Haeffelin, Andreas, 71665 Vaihingen (DE)

(57) **Zusammenfassung**

Die Erfindung geht aus von einer Filtervorrichtung, insbesondere für eine Brennstoffzelleneinheit (12a; 12b; 12c), mit zumindest einem Filterelement (14a; 14b; 14c), welches dazu vorgesehen ist, eine Verunreinigung zumindest eines Fluids zumindest zu reduzieren.

Es wird vorgeschlagen, dass das Filterelement (14a; 14b; 14c) zumindest im Wesentlichen von einer Keramik (16a; 16b; 16c) gebildet ist, welche überstöchiometrisch mit zumindest einem Zusatzstoff (18a; 18b; 18c) dotiert ist, der dazu vorgesehen ist, die Verunreinigung zumindest teilweise von dem Fluid zu trennen.

## Beschreibung

Es ist bereits eine Filtervorrichtung, insbesondere für eine Brennstoffzelleneinheit, mit zumindest einem Filterelement, welches dazu vorgesehen ist, eine Verunreinigung zumindest eines Fluids zumindest zu reduzieren, vorgeschlagen worden.

### Offenbarung der Erfindung

Die Erfindung geht aus von einer Filtervorrichtung, insbesondere für eine Brennstoffzelleneinheit, mit zumindest einem Filterelement, welches dazu vorgesehen ist, eine Verunreinigung zumindest eines Fluids zumindest zu reduzieren.

Es wird vorgeschlagen, dass das Filterelement zumindest im Wesentlichen von einer Keramik gebildet ist, welche mit überstöchiometrisch zumindest einem Zusatzstoff dotiert ist, der dazu vorgesehen ist, die Verunreinigung zumindest teilweise von dem Fluid zu trennen.

Unter einer "Filtervorrichtung" soll in diesem Zusammenhang insbesondere eine Vorrichtung verstanden werden, welche zu einer Trennung und/oder Reinigung, insbesondere mittels zumindest eines chemischen und/oder physikalischen Verfahrens, von Stoffen und/oder Stoffgemischen vorgesehen ist. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Filterelement" soll in diesem Zusammenhang insbesondere ein Element verstanden werden, durch welches man ein Fluid passieren lässt, um darin enthaltene Bestandteile, insbesondere Verunreinigungen, auszusondern. Unter einem "Fluid" soll in diesem Zusammenhang insbesondere ein Gas, ein Gasgemisch, eine Flüssigkeit und/oder ein Flüssigkeitsgemisch verstanden werden. Unter einer "Verunreinigung" soll in diesem Zusammenhang zumindest eine insbesondere unerwünschte Beimengung, insbesondere eine unerwünschte Beimengung in nicht unerheblicher Konzentration, in dem Fluid verstanden werden. Darunter, dass die Filtereinheit dazu vorgesehen ist, eine Verunreinigung des Fluids "zumindest zu reduzieren", soll in diesem Zusammenhang insbesondere verstanden werden, dass die Filtereinheit dazu vorgesehen ist, eine Konzentration der Verunreinigung in dem Fluid um zumindest 50 %, vorteilhaft um zumindest 75 % und besonders vorteilhaft um zumindest 90 % zu reduzieren. Vorzugsweise ist das Filterelement dazu vorgesehen, die Verunreinigung vollständig aus dem Fluid zu entfernen.

Unter einer "Keramik" soll in diesem Zusammenhang insbesondere ein anorganisches, nichtmetallisches Material verstanden werden. Insbesondere kann die Keramik zumindest teilweise kristallin und/oder polykristallin sein. Unter "nichtmetallisch" soll in diesem Zusammenhang insbesondere verstanden werden, dass die Keramik zumindest weitestgehend frei von insbesondere auf metallischen Bindungen beruhenden, metallischen Eigenschaften ist, jedoch Metallverbindungen, wie beispielsweise Metalloxide und/oder -silikate, umfassen kann. Insbesondere ist die Keramik eine technische Keramik. Insbesondere kann die Keramik eine Oxidkeramik, beispielsweise Aluminiumoxid oder Zirkonoxid, oder eine Nichtoxidkeramik, beispielsweise Siliziumkarbid oder Siliziumnitrid, sein. Vorzugsweise ist die Keramik eine Silikatkeramik, beispielsweise Steatit oder vorzugsweise Forsterit.

Unter einem "Zusatzstoff" soll in diesem Zusammenhang insbesondere ein Stoff verstanden werden, welcher der Keramik insbesondere zu einer Beeinflussung von Materialeigenschaften zugesetzt ist. Darunter, dass der Zusatzstoff dazu vorgesehen ist, die Verunreinigung von dem Fluid "zumindest teilweise zu trennen" soll in diesem Zusammenhang insbesondere verstanden werden, dass der Zusatzstoff dazu vorgesehen ist, die Verunreinigung insbesondere chemisch und/oder physikalisch zu zumindest 50 %, vorteilhaft zu zumindest 75 % und besonders vorteilhaft zu zumindest 90 % aus dem Fluid zu entfernen. Vorzugsweise ist das Filterelement dazu vorgesehen, die Verunreinigung vollständig von dem Fluid zu trennen. Insbesondere ist der Zusatzstoff dazu vorgesehen, Filtereigenschaften des Filterelements zu beeinflussen. Insbesondere ist der Zusatzstoff dazu vorgesehen, der Keramik während einer Herstellung des Filterelements, insbesondere vor und/oder während eines Sinterprozesses, zugesetzt zu werden. Alternativ oder zusätzlich kann das Filterelement während einer Herstellung mit dem Zusatzstoff imprägniert werden. Insbesondere reagiert der Zusatzstoff zumindest teilweise chemisch mit der Keramik. Darunter, dass die Keramik mit dem Zusatzstoff "überstöchiometrisch dotiert ist", soll in diesem Zusammenhang insbesondere verstanden werden, dass der Keramik ein Überschuss des Zusatzstoffs zugesetzt wird, so dass der Zusatzstoff lediglich unvollständig chemisch mit der Keramik reagiert. Die überstöchiometrisch dotierte Keramik weist insbesondere die allgemeine chemische Zusammensetzung A₂₋ₓM_{x+y}SiO₄ mit A=Mg, M=Zn und/oder Co, und x=0 - 0,3 und y=0 - 0,1, wobei M der Zusatzstoff, x ein stöchiometrischer Anteil der Dotierung und y ein überstöchiometrischer Anteil der Dotierung ist.

Durch eine derartige Ausgestaltung kann eine Filtervorrichtrung mit verbesserten Eigenschaften hinsichtlich einer Reduktion einer Verunreinigung eines Fluids bereitgestellt werden. Insbesondere kann durch die überstöchiometrische Dotierung mit einem Zusatzstoff, der dazu vorgesehen ist, die Verunreinigung zumindest teilweise von dem Fluid zu trennen, eine vorteilhafte Filterkapazität und/oder Filterleistung erreicht werden.

Ferner wird vorgeschlagen, dass der Zusatzstoff, dazu vorgesehen ist, die Verunreinigung zumindest teilweise zu binden. Insbesondere ist der Zusatzstoff dazu vorgesehen, die Verunreinigung physikalisch und/oder vorzugsweise chemisch zu binden. Der Zusatzstoff ist insbesondere dazu vorgesehen chemisch mit der Verunreinigung zu reagieren. Insbesondere ist der Zusatzstoff dazu vorgesehen, eine metastabile und/oder vorzugsweise stabile chemische Verbindung mit der Verunreinigung einzugehen. Hierdurch kann eine vorteilhaft sichere und/oder zuverlässige Aufnahme der Verunreinigung durch die Filtervorrichtung erfolgen.

Des Weiteren wird vorgeschlagen, dass das Filterelement dazu vorgesehen ist, eine Verunreinigung des Fluids durch Chrom und/oder zumindest eine Chromverbindung zumindest zu reduzieren. Insbesondere kann das Chrom und/oder die zumindest eine Chromverbindung in gelöster Form in dem Fluid vorliegen. Insbesondere ist die Filtereinheit dazu vorgesehen, eine Chromkonzentration in dem Fluid um zumindest 50 %, vorteilhaft um zumindest 75 % und besonders vorteilhaft um zumindest 90 % zu senken. Vorzugsweise ist das Filterelement dazu vorgesehen, Chrom und/oder Chromverbindungen vollständig aus dem Fluid zu entfernen. Vorzugsweise ist das Filterelement dazu vorgesehen, eine Verunreinigung, insbesondere eine Verunreinigung durch Chrom und/oder zumindest eine Chromverbindung, eines Kathodengases, insbesondere eines einer Brennstoffzelleneinheit zugeführten Kathodengases, zumindest zu reduzieren. Hierdurch kann eine Chromkonzentration in einem Fluid, insbesondere in einem Kathodengas, vorteilhaft reduziert werden.

Ferner wird vorgeschlagen, dass der Zusatzstoff ein Übergangsmetall ist. Insbesondere ist das Übergangsmetall dazu vorgesehen, sich mit der Verunreinigung zu einem Spinell zu verbinden. Insbesondere kann der Zusatzstoff Mangan, Eisen oder Nickel sein. Vorzugsweise ist der Zusatzstoff Zink und/oder Cobalt. Insbesondere ist das Zink und/oder das Cobalt dazu vorgesehen, sich mit der Verunreinigung zu einem Spinell zu verbinden.

Des Weiteren wird vorgeschlagen, dass das Filterelement eine Vielzahl von zumindest im Wesentlichen parallel zueinander angeordneten Durchtrittsausnehmungen für das Fluid aufweist. Insbesondere sind die Durchtrittsausnehmungen dazu vorgesehen, von dem Fluid durchströmt zu werden. Hierdurch kann eine vorteilhaft große aktive Filteroberfläche erreicht werden.

Ferner wird eine Brennstoffzelleneinheit mit zumindest einer erfindungsgemäßen Filtervorrichtung vorgeschlagen. Unter einer "Brennstoffzelleneinheit" soll in diesem Zusammenhang insbesondere eine Vorrichtung verstanden werden, welche dazu vorgesehen ist, zumindest eine chemische Reaktionsenergie zumindest eines, insbesondere kontinuierlich zugeführten, Brenngases, insbesondere Wasserstoff und/oder Kohlenstoffmonoxid, und zumindest eines Kathodengases, insbesondere Sauerstoff, insbesondere in elektrische und/oder thermische Energie, umzuwandeln. Insbesondere ist die Filtervorrichtung dazu vorgesehen, eine Verunreinigung zumindest eines der Brennstoffzelleneinheit zugeführten Fluids zumindest zu reduzieren. Die Filtervorrichtung ist insbesondere dazu vorgesehen, eine Verunreinigung eines Kathodengases zumindest zu reduzieren. Das Filterelement ist insbesondere dazu vorgesehen, eine Verunreinigung des Fluids durch Chrom und/oder zumindest eine Chromverbindung zumindest zu reduzieren. Insbesondere kann die Filtervorrichtung in einer Fluidzuleitung, insbesondere in einer Kathodengaszuleitung, der Brennstoffzelleneinheit angeordnet sein. Alternativ oder zusätzlich kann die Filtervorrichtung einstückig mit der Brennstoffzelleneinheit, insbesondere mit einem Fluidverteiler, der Brennstoffzelleneinheit ausgebildet sein. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Hierdurch kann eine Beschädigung der Brennstoffzelleneinheit, insbesondere einer Kathode der Brennstoffzelleneinheit, durch eine Verunreinigung eines der Brennstoffzelleneinheit zugeführten Fluids, vorteilhaft verhindert werden.

Zudem wird ein Verfahren zur Herstellung einer Filtervorrichtung, insbesondere für eine Brennstoffzelleneinheit, mit zumindest einem Filterelement, welches dazu vorgesehen ist, eine Verunreinigung zumindest eines Fluids zumindest zu reduzieren, vorgeschlagen, wobei bei der Herstellung des Filterelements eine Keramik überstöchiometrisch mit zumindest einem Zusatzstoff dotiert wird, der dazu vorgesehen ist, die Verunreinigung zumindest teilweise von dem Fluid zu trennen. Insbesondere wird der Zusatzstoff der Keramik vor und/oder während einer Sinterung der Keramik zugesetzt. Alternativ oder zusätzlich kann der Zusatzstoff der Keramik durch eine Imprägnierung, beispielsweise durch ein Eintauchen des Filterelements in einen zusatzstoffhaltigen Schlämme, zugesetzt werden. Durch die überstöchiometrische Dotierung mit einem Zusatzstoff, der dazu vorgesehen ist, die Verunreinigung zumindest teilweise von dem Fluid zu trennen, kann eine vorteilhafte Filterkapazität und/oder Filterleistung erreicht werden.

Die erfindungsgemäße Filtervorrichtung soll hierbei nicht auf die oben beschriebene Anwendung und Ausführungsform beschränkt sein. Insbesondere kann die erfindungsgemäße Filtervorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Brennstoffzellensystems mit einer Brennstoffzelleneinheit, welche eine Filtereinheit zu einer Reinigung eines Kathodengases aufweist,
- Fig. 2: eine perspektivische Ansicht eines keramischen Filterelements der Filtervorrichtung,
- Fig. 3: einen Schnitt durch die Keramik des Filterelements,
- Fig. 4: ein Diagramm einer thermodynamischen Berechnung einer überstöchiometrisch mit Zink dotierten Keramik in Luft bei einer Temperatur von 750°C und bei einer graduellen Zugabe von Chrom,
- Fig. 5: eine perspektivische Ansicht eines alternativen keramischen Filterelements einer Filtervorrichtung und
- Fig. 6: eine perspektivische Darstellung einer Brennstoffzelleneinheit mit einer Trägerplatte, welche ein Filterelement einer Filtereinheit ausbildet.

### Beschreibung der Ausführungsbeispiele

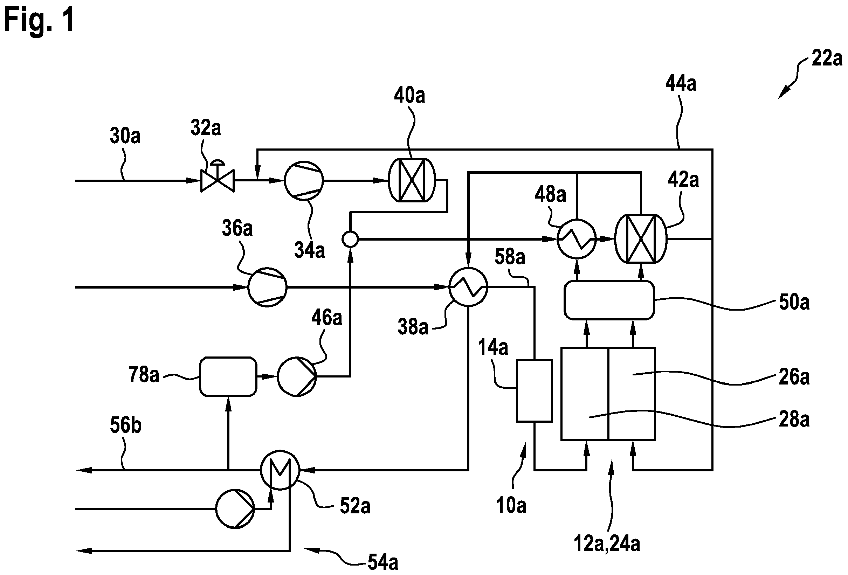

Figur 1 zeigt eine schematische Darstellung eines Brennstoffzellensystems 22a. Das Brennstoffzellensystem 22a ist dazu vorgesehen, mit einem fluidischen Brennstoff, insbesondere einem Erdgas, betrieben zu werden. Das Brennstoffzellensystem 22a weist eine Brennstoffzelleneinheit 12a auf. Die Brennstoffzelleneinheit 12 ist vereinfacht als eine einzelne Brennstoffzelle 24a dargestellt. Zweckmäßig ist jedoch eine Ausbildung einer Brennstoffzelleneinheit 12a, welche eine Vielzahl zu einem Brennstoffzellenstack verschaltete Brennstoffzellen aufweist. Die Brennstoffzelle 24a kann insbesondere als eine Festoxid-Brennstoffzelle ausgebildet sein. Die Brennstoffzelle 24a umfasst eine Anode 26a und eine Kathode 28a. Über eine Brennstoffleitung 30a wird der fluidische Brennstoff in das Brennstoffzellensystem 22a eingespeist. Die Einspeisung des fluidischen Brennstoffs kann mittels eines Brennstoffventils 32a gesteuert, geregelt und/oder vollständig unterbrochen werden. Das Brennstoffventil 32a ist vorzugsweise elektromagnetisch ansteuerbar ausgebildet. Mittels eines Brennstoffverdichters 34a wird eine ausreichende Flussrate des fluidischen Brennstoffs sichergestellt. Ein Kathodengas, insbesondere Luftsauerstoff, wird der Kathode 28a mittels eines weiteren Verdichters 36a zugeführt. Vor einer Einleitung in die Kathode 28a wird das Kathodengas mittels einer Vorheizeinheit 38a vorgeheizt. Ferner weist das Brennstoffzellensystem 22a eine Entschwefelungseinheit 40a auf. Die Entschwefelungseinheit 40a ist dem Brennstoffverdichter 34a strömungstechnisch nachgeschaltet. Die Entschwefelungseinheit 40a ist dazu vorgesehen, den fluidischen Brennstoff zu entschwefeln. Insbesondere ist die Entschwefelungseinheit 40a als eine Hydrodesulfierungseinheit ausgebildet. Das Brennstoffzellensystem 22a weist ferner eine Reformereinheit 42a auf. Die Reformereinheit 42a ist dazu vorgesehen, durch Reformierung des entschwefelten fluidischen Brennstoffs ein wasserstoffreiches Brenngas zu erzeugen. Die Reformereinheit 42a ist insbesondere als eine Dampfreformereinheit ausgebildet. Das aus der Reformereinheit 42a austretende wasserstoffreiche Brenngas wird größtenteils der Anode 26a der Brennstoffzelle 24a zugeführt. Ein geringerer Anteil wasserstoffreichen Brenngases wir der Entschwefelungseinheit 40a über eine Rezirkulationsleitung 44a zugeführt.

Das Brennstoffzellensystem 22a weist ferner eine Wasserpumpe 46a auf. Die Wasserpumpe 46a ist dazu vorgesehen, die Reformereinheit mit Wasser zu versorgen. Vor einer Einleitung in die Reformereinheit 42a wird das Wasser mittels einer Verdampfereinheit 48a verdampft. Die Wasserpumpe 46a ist insbesondere dazu vorgesehen der Reformereinheit 42a kontinuierlich Wasser zuzuführen. Insbesondere ist die Wasserpumpe 46a dazu vorgesehen, kontinuierlich Wasser von zumindest einer Wasserquelle 78a zu fördern. Das von der Wasserpumpe 46a geförderte Wasser wird mit dem aus der Entschwefelungseinheit 40a austretenden entschwefelten fluidischen Brennstoff gemischt. Ein Abgas der Kathode 28a und ein Abgas der Anode 26a werden einer Nachverbrennungseinheit 50a zugeführt, in welcher verbleibende brennbare Bestandteile in dem Abgas der Anode 26a nachverbrannt werden. Dabei freigesetzte thermische Energie wird beispielsweise mittels eines Wärmeübertragers 52a auf einen Heizkreislauf 54a, an die Reformereinheit 42a, an die Vorheizeinheit 38a und/oder an die Verdampfereinheit 48a übertragen. Ein Abgas des Brennstoffzellensystems 22a wird über eine Abgasleitung 56a ausgeleitet.

Die Brennstoffzelleneinheit 12a weist eine Filtervorrichtung 10a auf. Die Filtervorrichtung 10a umfasst ein Filterelement 14a, welches dazu vorgesehen ist, eine Verunreinigung eines Fluids zu reduzieren und vorzugsweise vollständig zu entfernen. Die Filtervorrichtung 12a ist in einer Kathodengaszuleitung 58a der Brennstoffzelleneinheit 12a angeordnet. Die Filtervorrichtung 12a ist zwischen der Vorheizeinheit 38a und der Kathode 28a angeordnet. Das Filterelement 14a ist dazu vorgesehen, eine Verunreinigung des Kathodengases zumindest zu reduzieren. Insbesondere bei einem Vorheizen des Kathodengases in chromhaltigen Leitungen und/oder in Wärmeübertragern aus einem chromhaltigen Material kann es zu einer Verunreinigung des Kathodengases mit Chrom und/oder Chromverbindungen kommen, was zu einer Vergiftung der Kathode 28a führen kann. Vorzugsweise ist das Filterelement 14a dazu vorgesehen, eine Verunreinigung des Kathodengases durch Chrom und/oder zumindest eine Chromverbindung zumindest zu reduzieren.

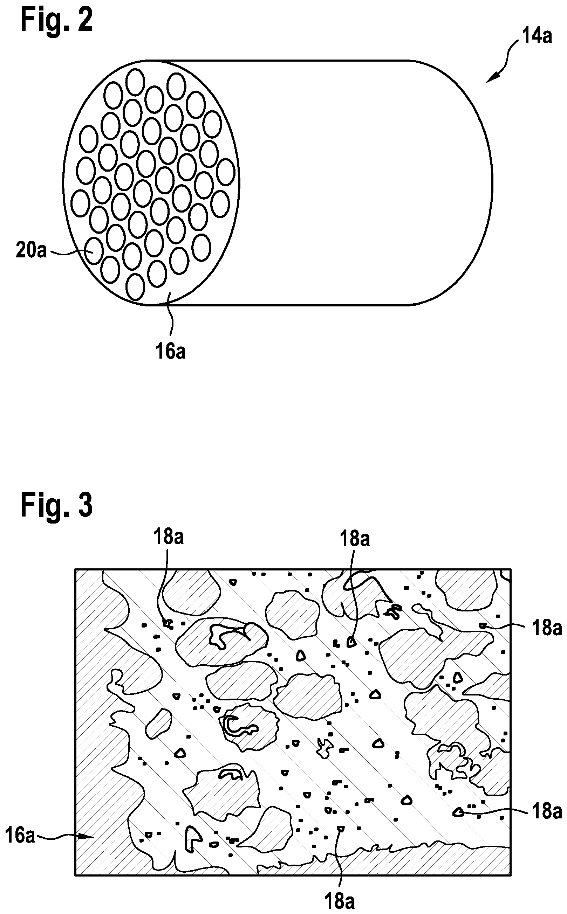

Figur 2 zeigt eine perspektivische Ansicht des Filterelements 14a. Das Filterelement 14a weist eine zylindrische Form auf. Alternativ kann das Filterelement 14a jedoch auch eine andere geometrische Form, beispielsweise eine Quaderform, aufweisen. Insbesondere kann ein Filterelement auch einstückig mit einem Brennstoffzellentubus für eine tubulare Brennstoffzelle ausgebildet sein oder selber einen Brennstoffzellentubus für eine tubulare Brennstoffzelle ausbilden. Das Filterelement 14a weist eine Vielzahl von zumindest im Wesentlichen parallel zueinander angeordneten Durchtrittsausnehmungen 20a für das Fluid auf. Die Durchtrittsausnehmungen 20a weisen einen kreisförmigen Querschnitt auf. Das zu reinigende Kathodengas wird durch die Durchtrittsausnehmungen 20a geleitet. Das Filterelement 14a ist zumindest im Wesentlichen von einer Keramik 16a gebildet. Die Keramik 16a ist insbesondere eine Silikatkeramik, vorzugsweise Forsterit. Die Keramik 16a ist überstöchiometrisch mit einem Zusatzstoff 18a dotiert, der dazu vorgesehen ist, die Verunreinigung zumindest teilweise von dem Fluid zu trennen. Vorzugsweise ist der Zusatzstoff 18a dazu vorgesehen, die Verunreinigung zumindest teilweise insbesondere chemisch zu binden. Der Zusatzstoff 18a ist vorzugsweise ein Übergangsmetall. Insbesondere ist das Übergangsmetall dazu vorgesehen, sich mit der Verunreinigung zu einem Spinell zu verbinden. Insbesondere kann der Zusatzstoff 18a Mangan, Eisen oder Nickel sein. Vorzugsweise ist der Zusatzstoff 18a Zink und/oder Cobalt. Insbesondere sind das Zink und/oder das Cobalt dazu vorgesehen, sich mit der Verunreinigung zu einem Spinell zu verbinden.

Figur 3 zeigt einen Schnitt durch die Keramik 16a des Filterelements 14a. Die Keramik 16a weist eine Olivin/Willemit-Struktur auf. Während der Herstellung des Filterelements 14a wird die Keramik 16a überstöchiometrisch dem Zusatzstoff 18a dotiert. Vorzugsweise wird der Keramik 16a vor einem Sintern eine überstöchiometrische Menge eines Übergangsmetalls, beispielsweise Zink, zugesetzt. Ein stöchiometrischer Anteil des Übergangsmetalls dient während des Sinterns dazu, eine Sintertemperatur herunterzusetzen. Während des Sinterns bildet sich innerhalb der Keramik 16a aus dem überstöchiometrischen Anteil des Übergangsmetalls ein Oxid 60a des Übergangmetalls, beispielsweise Zinkoxid.

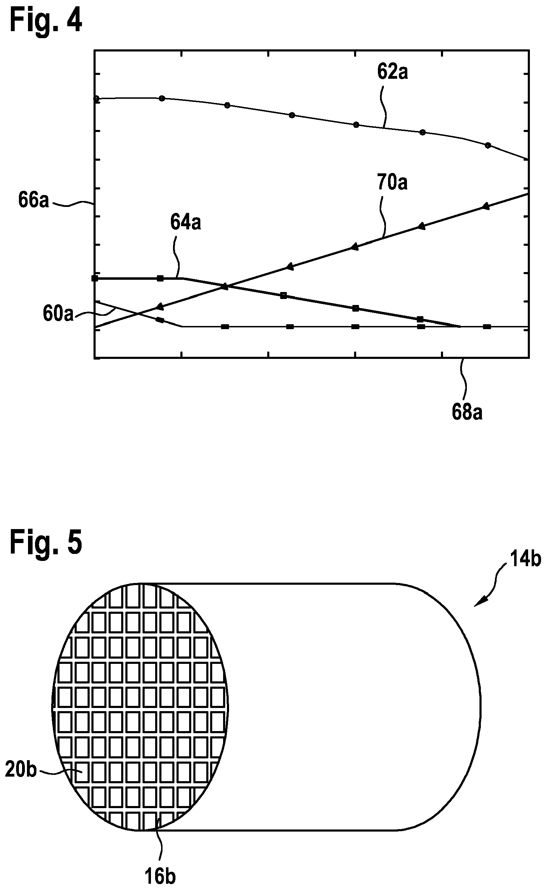

Figur 4 zeigt ein Diagramm einer thermodynamischen Berechnung einer überstöchiometrisch mit Zink dotierten Keramik 16a in Luft bei einer Temperatur von 750°C und bei einer graduellen Zugabe von Chrom. Das Diagramm zeigt einen Molanteil 66a der von Komponenten in der Keramik 16a bei zunehmendem Molanteil 68a des Chroms. Das Diagramm zeigt, dass die Olivinkomponente 62a und die Willemitkomponente 64a der Keramik 16a erst mit dem Chrom reagieren, wenn das Oxid 60a des Übergangsmetalls, hier Zinkoxid, vollständig mit dem Chrom zu einem Zink-Chrom-Spinell 70a reagiert hat. Die überstöchiometrische Dotierung der Keramik 16a ermöglicht eine Filterung des Chroms aus dem Kathodengas ohne eine Veränderung der Olivin/Willemit-Struktur der Keramik 16a.

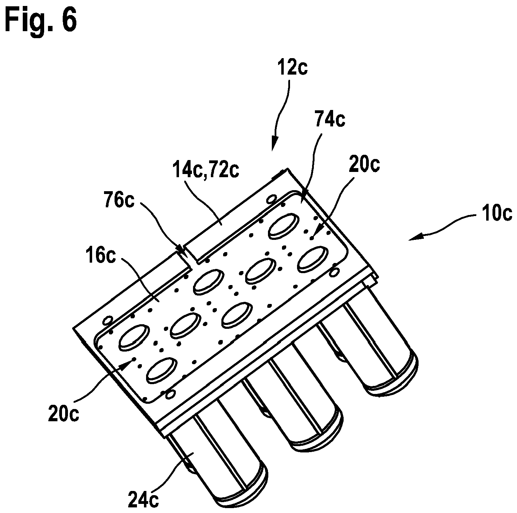

In den Figuren 5 und 6 sind zwei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 und 6 ist der Buchstabe a durch die Buchstaben b bis c ersetzt.

Figur 5 zeigt eine perspektivische Ansicht eines alternativen Filterelements 14b. Das Filterelement 14b weist eine zylindrische Form auf. Alternativ kann das Filterelement 14b jedoch auch eine andere geometrische Form, beispielsweise eine Quaderform, aufweisen. Das Filterelement 14b weist eine Vielzahl von zumindest im Wesentlichen parallel zueinander angeordneten Durchtrittsausnehmungen 20b für das Fluid auf. Die Durchtrittsausnehmungen 20b weisen einen rechteckigen Querschnitt auf. Alternativ können die Durchtrittsausnehmungen 20b jedoch auch einen von einer Rechteckform abweichenden Querschnitt, beispielsweise einen wabenförmigen Querschnitt aufweisen. Das zu reinigende Kathodengas wird durch die Durchtrittsausnehmungen 20b geleitet. Das Filterelement 14b ist zumindest im Wesentlichen von einer Keramik 16b gebildet. Die Keramik 16b ist insbesondere eine Silikatkeramik, vorzugsweise Forsterit. Die Keramik 16b ist überstöchiometrisch mit einem Zusatzstoff 18b dotiert, der dazu vorgesehen ist, eine Verunreinigung zumindest teilweise von einem Fluid zu trennen. Vorzugsweise ist der Zusatzstoff 18b dazu vorgesehen, die Verunreinigung zumindest teilweise insbesondere chemisch zu binden. Der Zusatzstoff 18b ist vorzugsweise ein Übergangsmetall. Insbesondere ist das Übergangsmetall dazu vorgesehen, sich mit der Verunreinigung zu einem Spinell zu verbinden. Insbesondere kann der Zusatzstoff 18b Mangan, Eisen oder Nickel sein. Vorzugsweise ist der Zusatzstoff 18b Zink und/oder Cobalt. Insbesondere sind das Zink und/oder das Cobalt dazu vorgesehen, sich mit der Verunreinigung zu einem Spinell zu verbinden.

Figur 6 zeigt eine perspektivische Darstellung einer Brennstoffzelleneinheit 12c. Die Brennstoffzelleneinheit 12c weist eine Trägerplatte 72c und eine Mehrzahl von tubularen Brennstoffzellen 24c auf. Die tubularen Brennstoffzellen 24c sind an der Trägerplatte 72c angeordnet. Die Brennstoffzelleneinheit 12c weist beispielhaft sechs tubulare Brennstoffzellen 24c auf. Die Trägerplatte 72c weist auf einer den Brennstoffzellen 24c abgewandten Seite eine großflächige Kavität 74c auf. Ein Einströmen eines Kathodengases erfolgt über einen Lufteinlasskanal 76c welcher in die Kavität 74c mündet. In einem montierten Zustand ist die Kavität 74c durch eine Deckplatte (nicht dargestellt) abgedeckt. Die Trägerplatte 72c bildet ferner ein Filterelement 14c einer Filtervorrichtung 10c aus. Die Trägerplatte 72c ist zumindest im Wesentlichen von einer Keramik 16c gebildet, welche überstöchiometrisch mit zumindest einem Zusatzstoff 18c dotiert ist, der dazu vorgesehen ist, eine Verunreinigung des Kathodengases zumindest zu reduzieren. Die Trägerplatte 72c weist eine Vielzahl von zumindest im Wesentlichen parallel zueinander angeordneten Durchtrittsausnehmungen 20c für das Kathodengas auf. Die Durchtrittsausnehmungen 20c sind kreisförmig um die Positionen der tubularen Brennstoffzellen 24c herum angeordnet. Die Durchtrittsausnehmungen 20c sind somit derart angeordnet, dass bei einer Einleitung des Kathodengases eine gleichmäßige Beströmung jeder der tubularen Brennstoffzellen 24c entsteht. Alternativ oder zusätzliche können auch Brennstoffzellentuben der tubularen Brennstoffzellen 24c ein Filterelement 14c ausbilden.

## Patentansprüche

1. Filtervorrichtung, insbesondere für eine Brennstoffzelleneinheit (12a; 12b; 12c), mit zumindest einem Filterelement (14a; 14b; 14c), welches dazu vorgesehen ist, eine Verunreinigung zumindest eines Fluids zumindest zu reduzieren, **dadurch gekennzeichnet, dass** das Filterelement (14a; 14b; 14c) zumindest im Wesentlichen von einer Keramik (16a; 16b; 16c) gebildet ist, welche überstöchiometrisch mit zumindest einem Zusatzstoff (18a; 18b; 18c) dotiert ist, der dazu vorgesehen ist, die Verunreinigung zumindest teilweise von dem Fluid zu trennen.

2. Filtervorrichtung nach Anspruch 1, **dadurch gekennzeichnet, dass** die Keramik (16a; 16b; 16c) eine Silikatkeramik ist.

3. Filtervorrichtung nach Anspruch 1 oder 2, **dadurch gekennzeichnet, dass** der Zusatzstoff (18a; 18b; 18c), dazu vorgesehen ist, die Verunreinigung zumindest teilweise zu binden.

4. Filtervorrichtung nach einem der vorhergehenden Ansprüche, **dadurch gekennzeichnet, dass** das Filterelement (14a; 14b; 14c) dazu vorgesehen ist, eine Verunreinigung des Fluids durch Chrom und/oder zumindest eine Chromverbindung zumindest zu reduzieren.

5. Filtervorrichtung nach einem der vorhergehenden Ansprüche, **dadurch gekennzeichnet, dass** das Filterelement (14a; 14b; 14c) dazu vorgesehen ist, eine Verunreinigung eines Kathodengases zumindest zu reduzieren.

6. Filtervorrichtung nach einem der vorhergehenden Ansprüche, **dadurch gekennzeichnet, dass** der Zusatzstoff (18a; 18b; 18c) zumindest ein Übergangsmetall ist.

7. Filtervorrichtung nach Anspruch 6, **dadurch gekennzeichnet, dass** das Übergangsmetall Zink und/oder Cobalt ist.

8. Filtervorrichtung nach einem der vorhergehenden Ansprüche, **dadurch gekennzeichnet, dass** das Filterelement (14a; 14b; 14c) eine Vielzahl von zumindest im Wesentlichen parallel zueinander angeordneten Durchtrittsausnehmungen (20a; 20b; 20c) für das Fluid aufweist.

9. Brennstoffzelleneinheit mit zumindest einer Filtervorrichtung (10a; 10b; 10c) nach einem der vorhergehenden Ansprüche.

10. Verfahren zur Herstellung einer Filtervorrichtung (10a; 10b; 10c), insbesondere für eine Brennstoffzelleneinheit (12a; 12b; 12c), insbesondere nach einem der Ansprüche 1 bis 8, mit zumindest einem Filterelement (14a; 14b; 14c), welches dazu vorgesehen ist, eine Verunreinigung zumindest eines Fluids zumindest zu reduzieren, **dadurch gekennzeichnet, dass** bei der Herstellung des Filterelements (14a; 14b; 14c) eine Keramik (16a; 16b; 16c) überstöchiometrisch mit zumindest einem Zusatzstoff (18a; 18b; 18c) dotiert wird, der dazu vorgesehen ist, die Verunreinigung zumindest teilweise von dem Fluid zu trennen.
